(19) Europäisches Patentamt

European Patent Office

Office européen des brevets

(11) Veröffentlichungsnummer: **0 185 667**
**B1**

(12) **EUROPÄISCHE PATENTSCHRIFT**

(45) Veröffentlichungstag der Patentschrift: **10.10.90**

(51) Int. Cl.⁵: **G 06 F 11/00, G 05 B 9/02**

(21) Anmeldenummer: **85901367.4**

(22) Anmeldetag: **20.03.85**

(86) Internationale Anmeldenummer:
**PCT/DE85/00089**

(87) Internationale Veröffentlichungsnummer:
**WO 86/00155 03.01.86 Gazette 86/01**

(54) RÜCKSETZSCHALTUNG FÜR MIKROPROZESSOREN.

(30) Priorität: **09.06.84 DE 3421584**

(43) Veröffentlichungstag der Anmeldung:
**02.07.86 Patentblatt 86/27**

(45) Bekanntmachung des Hinweises auf die
Patenterteilung:
**10.10.90 Patentblatt 90/41**

(84) Benannte Vertragsstaaten:
**DE FR GB SE**

(56) Entgegenhaltungen:
**EP-A-0 088 041
DE-A-3 320 587
FR-A-2 437 651
FR-A-2 454 137
NL-A-8 105 474
US-A-4 317 167**

(73) Patentinhaber: **ROBERT BOSCH GMBH
Postfach 50
D-7000 Stuttgart 1 (DE)**

(72) Erfinder: **BAUER, Bernhard
Am Pfarrtor 15
D-7253 Renningen (DE)**
Erfinder: **LANGNER, Arnd, Matthias
Haydnweg 16
D-7141 Schwieberdingen (DE)**
Erfinder: **MAYER, Ulrich
Fuggerstrasse 27
D-7050 Waiblingen (DE)**
Erfinder: **SCHLEUPEN, Richard
Gottlob-Amsel-Strasse 6
D-7121 Ingersheim (DE)**

Courier Press, Leamington Spa, England.

## Beschreibung

Stand der Technik

Die Erfindung geht aus von einer Rücksetzschaltung für Mikroprozessoren nach den Gattungen der Hauptansprüche 1 und 5. Rücksetzschaltungen für Mikroprozessoren sind seit langem bekannt. Einerseits dienen sie dazu, um beim Anlegen der Spannungsversorgung an den Mikroprozessor diesen in einen definierten Ausgangszustand zu versetzen. Andererseits sind bereits Rücksetzschaltungen vorgeschlagen worden, die dann ein Rücksetzen des Mikroprozessors veranlassen, wenn das im Mikroprozessor abgelegte Programm nicht ordnungsgemäß abgearbeitet wird. Dazu werden an einem Ausgang des Mikroprozessors Signale erzeugt. Diese Signale treten beispielsweise bei jedem Programmdurchlauf einmal auf. Fallen nun diese Signale für eine längere Zeit aus, so wird ein Rücksetzimpuls abgegeben. Diese Methode des Rücksetzens ist jedoch nicht in allen Fällen zuverlässig. Beispielsweise kann ein Ausfall des Mikroprozessors auch dadurch entstehen, daß vom Programmbereich in den Datenbereich (RAM oder ROM) gesprungen wird. Die Programmbefehle werden nun nach den im Datenbereich abgelegten Daten bestimmt. Hierdurch können sich Endlosschleifen bilden, durch die dann ebenfalls ein Ausgang des Mikroprozessors angesprochen wird. Obwohl daher der Mikroprozessor nicht mehr einwandfrei arbeitet, wird nunmehr bei den bekannten Schaltungsanordnungen kein Rücksetzen ausgelöst, da Impulse a Ausgang des Mikroprozessors vorhanden sind. Dies kann bewirken, daß das mit dem Mikroprozessor betriebene Gerät nicht mehr arbeitet. Im schlimmsten Falle können sogar Beschädigungen am Gerät auftreten, nämlich dann, wenn dadurch Verbraucher eingeschaltet werden, die bestimmungsgemäß nur kurze Zeit belastet werden und durch eine Fehlschaltung des Mikroprozessors nunmehr dauernd belastet sind.

Aus der US-A 4 317 167 ist eine Überwachungsschaltung bekanntgeworden, bei der das Eingangssignal für einen Prozessor und das Ausgangssignal eines Prozessors miteinander verknüpft werden. Hierbei wird das Eingangssignal über eine Verzögerungsstufe einer Verknüpfungsschaltung zugeführt. Treten das verzögerte Eingangssignal und das Ausgangssignal nicht gleichzeitig auf, so wird nach einer vorgegebenen Zeit durch einen Schalter Alarm ausgelöst oder ein Ersatzmikroprozessor eingeschaltet. Notwendig ist hierbei, daß das Ausgangssignal am Prozessor nach einer Zeit auftritt, die durch die Verzögerungsstufe für das Eingangssignal bestimmt ist. Die FR-A 2 437 651 zeigt und beschreibt Rücksetzschaltungen, bei denen ein Rücksetzvorgang unter anderem dann ausgelöst wird, wenn vom Rechner nicht in regelmäßigen Abständen sogenannte Watchdog-Impulse abgegeben werden.

Vorteile der Erfindung

Die erfindungsgemäßen Rücksetzschaltungen mit den kennzeichnenden Merkmalen der Hauptansprüche 1 und 5 haben demgegenüber den Vorteil, daß in Abhängigkeit von zyklisch am Mikroprozessor angelegten Eingangssignalen eine Überwachung der Funktionsfähigkeit des Mikroprozessors erfolgt. Wird durch ein Eingangssignal nicht innerhalb einer vorgegebenen Zeit eine ganz bestimmte Reaktion des Prozessors bewirkt, so ist davon auszugehen, daß der Prozessor nicht einwandfrei arbeitet. Hierbei ist es völlig gleichgültig, wie die Signale an dem bestimmten Ausgang aussehen. Ein Fehler ist erkannt, wenn der Ausgang nicht innerhalb einer vorgegebenen Zeit nach Eintreffen des zyklischen Eingangssignales angesprochen hat. Dann wird durch das Öffnen oder Schließen eines Schalters der Rücksetzimpuls ausgelöst. Durch die Unterdrückung eventuell kurzzeitig auftretender Signale durch Verwendung des Schalters wird erreicht, daß die gesamte Rücksetzschaltung einfach aufzubauen ist. Bereits für die Ansteuerung eines Mikroprozessors notwendige schaltungstechnische Maßnahmen können eingebaut werden, so daß kurzzeitig auftretende Signale, die schaltungstechnisch bedingt sind, unterdrückbar sind.

Zur Absicherung gefährdeter Verbraucher beim Ausbleiben der zyklischen Eingangssignale oder während des Programmdurchlaufes ist es vorteilhaft, zumindest einen weiteren Ausgang des Mikroprozessors auszuwerten, wenn er länger als eine vorgegebene Zeit in einer vorgegebene Stellung verharrt. Die Auslösung des Rücksetzimpulses erfolgt am einfachsten durch das Be- bzw. Entladen eines Kondensators über Widerstände. Möglich und auch zweckmäßig ist die Verwendung von monostabilen Kippgliedern. Um das Abschalten des Resetimpulses möglichst schnell zu erreichen ist es zweckmäßig, den einen Teil der Widerstände zum Be- und Entladen des Kondensators mit Dioden zu überbrücken. Dadurch kann ein schnelles Wiederanlaufen des Mikroprozessors nach einem Störfall erzielt werden.

Zeichnung

Ausführungsbeispiele der Erfindung sind in der Zeichnung dargestellt und in der nachfolgenden Beschreibung näher erläutert. Es zeigen Figur 1 ein erstes Ausführungsbeispiel der Erfindung, Figur 2 ein Diagramm zur Erläuterung der Erfindung, Figur 3 ein Strukturdiagramm zur Erläuterung der Funktion des Mikroprozessors und die Figuren 4 und 5 weitere Ausführungsbeispiele der Erfindung.

Beschreibung der Ausführungsbeispiele

Die Figuren zeigen Rücksetzschaltungen, die insbesondere für Rechner geeignet sind, deren RAM im normalen Adressbereich liegt, also vom Programmzähler angewählt werden kann. Bei diesen Mikroprozessoren besteht die Gefahr, daß bei der Bearbeitung von Programmen, die üblicherweise im ROM-Bereich des Mikroprozessors abgelegt sind, in den RAM-Bereich gesprungen wird, in dem sich Daten befinden. Die Daten werden nunmehr vom Rechner als Programmschritte interpretiert. Dies kann zu völlig unerwarteten Ergebnissen führen. Insbesondere ist jedoch die Betriebsbereitschaft des mit dem Mikroprozessor bestückten Gerätes nicht mehr gewährleistet. Im Gegenteil besteht die Gefahr, daß das Gerät selbst unter Umständen zerstört wird. Beispielhaft sei ein Steuergerät für die elektrische Zündanlage eines Kraftfahrzeuges erwähnt. Springt der Mikroprozessor aus dem Programmbereich heraus in den Datenbereich, so kann dies einerseits bewirken, daß Fehlzündungen im Fahrzeug ausgelöst werden, was auf die Dauer zu einer Zerstörung des Motors führen würde. Andererseits besteht die Möglichkeit, daß der Mikroprozessor sich in einer endlosen Schleife bewegt, die er nicht verlassen kann. In diesem Fall ist das Fahrzeug nicht betriebsbereit. Schließlich kann der Mikroprozessor auch an einer beliebigen Stelle im Programm- oder Datenbereich stoppen, so daß ein weiterer Betrieb nicht mehr möglich ist. Ist dabei das mit dem Mikroprozessor gesteuerte Zündgerät eingeschaltet, so hat dies zur Folge, daß dauernd ein Zündstrom über die Zündspule fließt, die sich unter diesen Umständen erwärmen kann, was seinerseits zu einer Überlastung des Zündgerätes oder der Zündspule führt. Dies würde eine Zerstörung der Zündanlage zufolge haben.

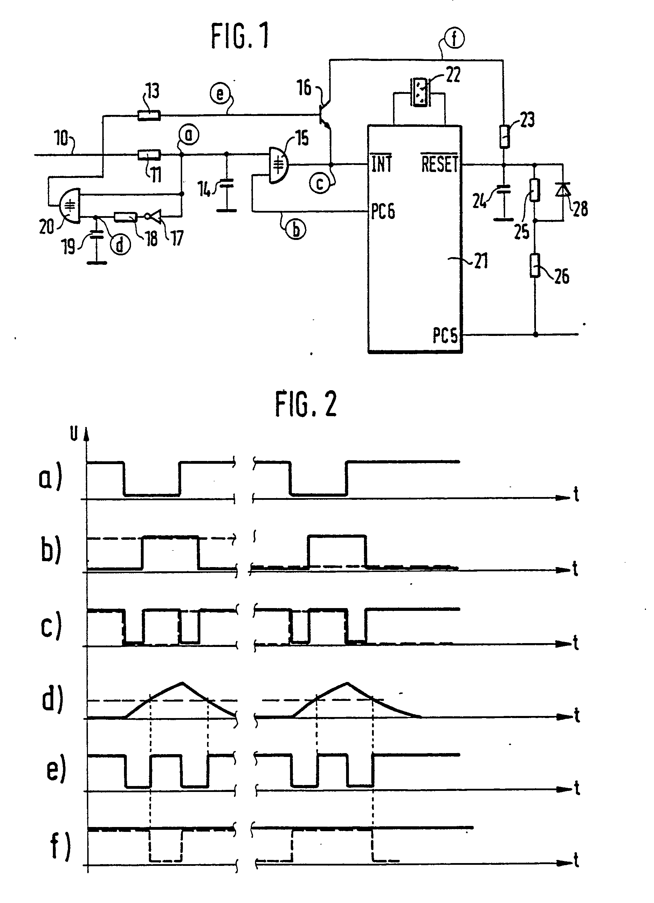

Die Figur 1 zeigt eine Rücksetzschaltung, die bei einem Fehlverhalten des Mikroprozessors diesen zurücksetzt und einen neuen Anlauf bewirkt. An die Leitung 10 ist ein Impulsgeber, beispielsweise der Hallgeber einer Zündanlage, angeschlossen. Die Leitung 10 ist über den Widerstand 11 mit einem Eingang eines Antivalenzgliedes 15 verbunden. Von diesem Eingang des Antivalenzgliedes 15 ist ein Kondensator 14 zur Masse geschaltet. Der Ausgang des Antivalenzgliedes führt einerseits zum Emitter des Transistors 16 und zum anderen zu einem Interrupteingang INT des Mikroprozessors 21. Der Ausgang PC6 des Mikroprozessors 21 steht mit dem weiteren Eingang des Antivalenzgliedes 15 in Verbindung. Zwischen dem Widerstand 11 und dem Antivalenzglied 15 ist des weiteren eine Leitung abgezweigt, die zu jeweils einem Eingang eines Inverters 17 und eines Antivalenzgliedes 20 führt. An den Ausgang des Inverters 17 ist ein Widerstand 18 angeschlossen, der zu dem weiteren Eingang des Antivalenzgliedes 20 führt. Von diesem Eingang führt auch ein Kondensator 19 an die gemeinsame Masseleitung. Der Ausgang des Antivalenzgliedes 20 ist über einen Widerstand 13 mit der Basis des Transistors 16 verbunden. Der Kollektor des Transistors 16 führt über einen Widerstand 23 zum Rücksetzeingang RESET des Mikroprozessors 21. An den Rücksetzeingang ist des weiteren ein Kondensator 24 angeschlossen, der gegen Masse geschaltet ist. Ein weiterer Ausgang PC5 führt beispielsweise zu einer nicht dargestellten zu schaltenden Schaltstufe. Von dieser Leitung führt ein Widerstand 26 und ein Widerstand 25 in Reihe ebenfalls zum Rücksetzeingang des Mikroprozessors 21. Der Widerstand 25 ist dabei parallel mit einer Diode 28 geschaltet. Ein Quarz 22 sorgt mit einer im Mikroprozessor 21 befindlichen Taktschaltung für das Taktsignal des Mikroprozessors.

Die Funktionsweise der Schaltungsanordnung nach Figur 1 sei anhand des Diagramms in Figur 2 näher erläutert. An der Leitung 10 liegt das zyklische Signal eines Gebers an, beispielsweise das Signal eines Zündimpulsgebers. Geeignet sind auch alle anderen Arten von zyklischen Signalen. Dieses Signal nach Figur 2a gelangt über das Antivalenzglied 15 zum Interrupteingang. Das Signal am Interrupteingang des Mikroprozessors wird von diesem verarbeitet und schaltet nach einer Verzögerung den Ausgang PC6 um. Das vom Mikroprozessor am Ausgang PC6 ausgegebene Signal ist in Figur 2b dargestellt. Aufgrund der Programmierung des Mikroprozessors erfolgt die Ausgabe zeitverzögert und invertiert zum Signal über dem Kondensator 14. Da dieses Signal über das Antivalenzglied 15 mit dem Eingangssignal des Gebers verknüpft ist, liegt am Interrupteingang des Mikroprozessors 21 ein Signal nach Figur 2c an (durchgezogene Linie). Diese Signalausführung zeigt, daß sowohl bei der ansteigenden als auch bei der abfallenden Flanke des Signales nach Figur 2a ein Interrupt ausgelöst wird. Der Interrupt bewirkt, daß ein bestimmter Programmablauf gestartet wird. Gleichzeitig wird das Gebersignal über den Inverter 17 invertiert, so daß sich nun der Kondensator 19 über den Widerstand 18 auflädt bzw. entlädt, wie dies in Figur 2d dargestellt ist. Aufgrund der Antivalenzverknüpfung 20 des Gebersignals mit dem Ladezustand des Kondensators 19 werden Austastimpulse nach Figur 2e erzielt, die bei jeder Flanke des Gebersignals auftreten. Die Länge dieser Austastimpulse ist dabei durch das Zeitverhalten des RC-Gliedes mit dem Widerstand 18 und dem Kondensator 19 bestimmt. Dieses Zeitverhalten ist nun so gewählt, daß die Austastimpulse nach Figur 2e länger sind als die zu erwartenden Impulse nach Figur 2c, deren Dauer durch die Zeit bestimmt ist, bis nach einem Flankenwechsel des Gebers an Leitung 10 am Ausgang PC6 des Mikroprozessors ein Impuls abgegeben wird. Je nach Rechenzeit bis zu diesem Augenblick sind daher die Austastimpulse entsprechend lang zu wählen. Diese Austastimpulse dienen dazu, den Transistor 16 zu sperren, so daß die Interruptpulse nicht fälschlicherweise als Rücksetzimpulse erkannt werden. Während der Austastimpulse nach Figur 2e können daher die Impulse nach Figur 2c nicht zu einem Strom durch den Widerstand 23 führen. Der Kondensator 24, dessen Entladung die Rücksetzimpulse erzeugen könnte, kann daher nicht über den Transistor 16 entladen werden, während die Interruptimpulse vorliegen. Gemäß Figur 2f (durchgezogene Linie) liegt daher ein Rücksetzsignal am Rücksetzeingang des Mikroprozessors 21 nicht an.

Im Falle eines Fehlverhaltens des Programmes steht zu erwarten, daß am Ausgang PC6 ein verzögertes Signal nach Figur 2b nicht auftritt. In Abhängigkeit von dem Zeitpunkt, an dem der Mikroprozessor aus dem Programm herausspringt, kann am Ausgang PC6 entweder dauernd eine logische 1 oder dauernd eine logische 0 anliegen. Arbeitet der Prozessor undefiniert in einer Schleife, können auch schnelle Rechteckimpulse auftreten. Auf der linken Seite der Figur 2 ist der Fall dargestellt, daß am Ausgang PC6 dauernd eine logische 1 anliegt. Dies ist in der Figur 2b mit gestrichelten Linien gekennzeichnet. Am Ausgang des Antivalenzgliedes 15 treten nun nicht mehr kurze Impulse beim Flankenwechsel des Gebersignales auf, sondern es wird das Gebersignal nochmals abgebildet (Fig. 2e). Dies hat zur Folge, daß das Signal nach Figur 2c länger ist als die Austastimpulse nach Figur 2e, die nur von den Gebersignalen gewonnen werden. Dies bedeutet, daß der Transistor 16 durchschaltet, so lange das Interruptsignal am Eingang des Mikroprozessors 21 noch auf einer logischen 0 liegt. Der Kondensator 24 wird nun über den relativ niederohmigen Widerstand 23 und die Kollektor-Emitter-Strecke des Transistors 16 entladen. Figur 2f zeigt den Spannungseinbruch am Rücksetzeingang des Mikroprozessors, durch den der Rücksetzimpuls ausgelöst wird.

Die rechte Seite der Figur 2 zeigt den Fall, daß vom Ausgang PC6 des Mikroprozessors 21 ständig eine logische 0 abgegeben wird. In diesem Fall liegt am Interrupteingang des Mikroprozessors aufgrund des Antivalenzgliedes 15 das invertierte Signal des Gebers an, wie dies in Figur 2c dargestellt ist. In diesem Falle ist der Zustand 0 am Interrupteingang ebenfalls sehr viel länger als die Austastimpulse nach Figur 2e, so daß gemäß Figur 2f der Kondensator 24 wiederum entladen wird. Hierdurch wird ebenfalls ein Interrupt ausgelöst, der den Mikroprozessor auf seinen Startpunkt zurücksetzt.

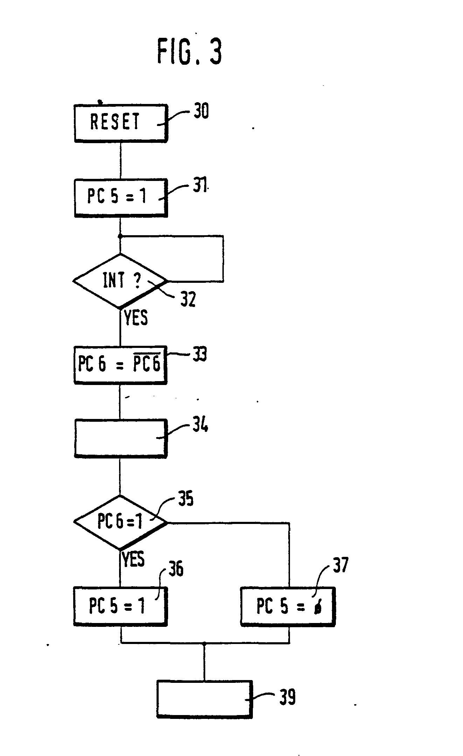

Die Arbeitsweise des Mikroprozessors 21 sei anhand des Strukturdiagramms anhand der Figur 3 beispielhaft erläutert. Bei einem Rücksetzimpuls, der beispielsweise auch beim Einschalten des Mikroprozessors durch den zunächst entladenen Kondensator 24 ausgelöst wird, wird der Mikroprozessor in seinen Anfangszustand 30 versetzt. Danach wird an der Stelle 31 der Mikropro-zessor initialisiert. Wesentliche Parameter erhal-ten dabei fest vorgegebene Anfangsbedingun-gen. Hier interessierend ist im wesentlichen der Ausgang PC5, der auf eine logische 1 gesetzt wird. Eine logische 1 am Ausgang PC5 des Mikroprozessors bedeutet hierbei, daß beispielsweise ein nachfolgendes Zündgerät abgeschaltet wird, so daß kein Stromdurch die Zündspule fließen kann. An der Abfragestelle 32 wartet nun der Mikroprozessor, ob er am Interrupteingang ein Signal erhält. Tritt kein Signal auf, so läuft er in einer Schleife bzw. arbeitet das übrige Programm ab. Tritt ein Signal nach Figur 2c auf, wird das Rechenprogramm gestartet. Nach Ablauf einer vorgegebenen Zeit wird an der Stelle 33 das Ausgangssignal des Ausgangs PC6 invertiert. Das heißt eine logische 1 wird in eine logische 0 umgeschaltet, eine logische 0 in eine logische 1.

Für unseren Anwendungsfall bedeutet dies, daß nach jeder Impulsflanke von 1 nach 0 nach Figur 2c der Ausgang PC6 seinen Zustand ändert, wie dies in Figur 2b dargestellt ist. Diese Zustandsänderung entfällt, wenn der Mikroprozessor das Programm zu diesem Zeitpunkt verlassen hat. Danach werden die Rechenoperationen 34 bearbeitet. Hierbei können beispielsweise interne Zähler gesetzt werden, es können Zeiten erfaßt werden oder sonstige Operationen gestartet werden. An einer weiteren Abfragestelle wird nun festgestellt, ob der Ausgangport PC6 den Zustand 1 hat. Ist dies der Fall, so wird der Ausgangsport PC5 unabhängig von seinem vorhergehenden Zustand bei der Stelle 36 auf eine logische 1 geschaltet, ansonsten auf eine logische 0 an der Stelle 37. Bei diesem speziell bei der Zündung anzuwendenden Programm kann dadurch erkannt werden, ob der Geber eine positive oder eine negative Flanke abgegeben hat, d.h. ob eine Zündung begonnen werden soll oder erst die Zündspule geladen werden soll. Beim Übergang von 1 nach 0 am Ausgang PC5 des Mikrocomputers wird auf jeden Fall ein Zündvorgang eingeleitet. Danach können an der Stelle 39 weitere Rechneroperationen durchgeführt werden.

Treten nun aufgrund von Störungen im Rechenablauf am Ausgang PC6 Störungen dergestalt auf, daß der Ausgang PC6 ständig hin- und hergeschaltet wird, weil beispielsweise mit der Stelle 34 im Rechner eine neue Schleife gebildet wurde, die die übrigen Programmteile nicht berücksichtigt, so erfolgt ebenfalls ein Rücksetzen des Rechners, da auch dann zu erwarten steht, daß aufgrund der mit dem Eingangssignal 10 nicht korrelierten Impulsfolge außerhalb der Austastimpulse nach Figur 2e eine Schaltung des Interrupt auf 0 erfolgt, ohne daß dieser vorgesehen war. Auch dies bewirkt eine Entladung des Kondensators 24.

Erkennbar wird auch, daß eine Entladung des Kondensators 24 über die Widerstände 25 und 26 stattfindet, wenn der Mikroprozessor beispielsweise auf der Stelle 37 hängenbleibt, oder im Programm stehen bleibt, wenn der Ausgang PC5 auf logisch 0 steht. In diesem Fall erfolgt die Entladung des Kondensators 24 über die Widerstände 25 und 26. Da nach einem erfolgten Rücksetzen an der Stelle 30 zugleich der Ausgang PC5 auf eine 1 an der Stelle 31 geschaltet wird, muß nunmehr der Rücksetzimpuls möglichst schnell aufgehoben werden. Dies geschieht dadurch, daß der Kondensator über den Widerstand 26 und die Diode 28 wieder geladen wird. Wird der Widerstand 26 sehr klein gewählt, erfolgt der Ladevorgang sehr viel schneller als der Entladevorgang über den relativ hochohmigen Widerstand 25. Der Widerstand 25 wird z.B. bei einer Anwendung als Zündungssteuergerät so gewählt, daß die während der maximal zulässigen Einschaltzeit auftretende Entladung des Kondensators 24 noch nicht zu einem Reset führt. Der Rechner ist daher in kurzer Zeit betriebsbereit.

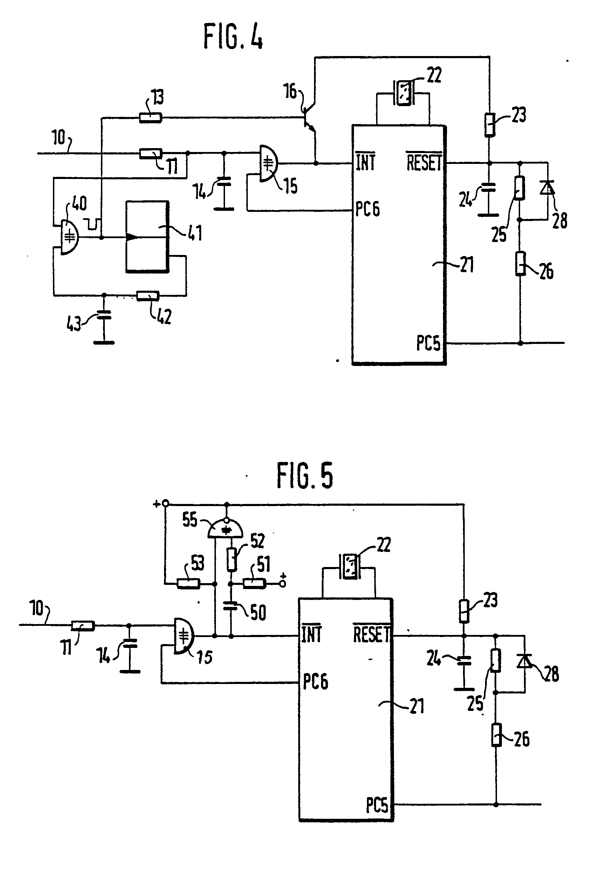

Die Figuren 4 und 5 zeigen weitere Ausfüh-rungsbeispiele der erfindungsgemäßen Rücksetz-

schaltung. Figur 4 zeigt wieder die Leitung 10, an die der Impulsgeber angeschlossen ist, wobei die Impulse über den Widerstand 11 dem Antivalenzglied 15 zugeführt werden. Der Ausgang des Antivalenzgliedes 15 steht wieder mit dem Interrupteingang des Mikroprozessors 21 in Verbindung. An den weiteren Eingang des Antivalenzgliedes 15 ist der Ausgang PC6 des Mikroprozessors angeschlossen. Zwischen Widerstand 11 und Antivalenzglied 15 ist ein Kondensator 14 an Masse geschaltet, während gleichzeitig eine Leitung zu einem Eingang eines Antivalenzgliedes 40 führt. Der Ausgang des Antivalenzgliedes 40 steht mit dem Eingang eines D-Flip-Flops 41 und mit der Basis des Transistors 16 über einen Widerstand 13 in Verbindung. Der Ausgang des D-Flip-Flops 41 ist über einen Widerstand 42 an den weiteren Eingang des Antivalenzgliedes 40 geschaltet. Von diesem Eingang des Antivalenzgliedes 40 führt des weiteren ein Kondensator 43 zur Masse. Der Emitter des Transistors 16 steht mit dem Interrupteingang in Verbindung, während der Kollektor über einen Widerstand 23 mit dem Rücksetzeingang in Verbindung steht. Vom Rücksetzeingang führt des weiteren ein Kondensator 24 an die Masse. Der Ausgang PC5 steht mit einem nicht dargestellten Schaltgerät in Verbindung. Des weiteren ist ein Widerstand 26 mit dem Widerstand 25 in Reihe geschaltet und zum Rücksetzeingang geführt. Parallel zum Widerstand 25 ist eine Diode 28 gelegt. Die Schaltungsanordnung hat die gleiche Funktionsweise wie die in Figur 1 dargestellte. Die Austastimpulse werden wiederum durch ein Zeitglied mit dem Ladekondensator 43 und dem Widerstand 42 erzeugt.

In Figur 5 wird ein zyklisches Signal über die Leitung 10 und den Widerstand 11 mit dem an Masse geschalteten Kondensator 14 einem Eingang des Antivalenzgliedes 15 zugeführt, während der weitere Eingang des Antivalenzgliedes 15 mit dem Ausgang PC6 des Mikroprozessors 21 in Verbindung steht. Der Ausgang des Antivalenzgliedes 15 ist dem Interrupteingang des Mikroprozessors 21 zugeführt. Des weiteren führt eine Leitung direkt und eine weitere Leitung über die Reihenschaltung eines RC-Gliedes mit dem Kondensator 50 und dem Widerstand 52 zu je einem Eingang eines negierenden Antivalenzgliedes 55. Pull-up-Widerstände 53 und 51 sind sowohl in die direkte Leitung als auch zwischen Kondensator 50 und Widerstand 52 geschaltet. Der Ausgang des negierten Antivalenzgliedes hat einen offenen Kollektor. Der Ausgang steht weiterhin über den Widerstand 23 mit dem Rücksetzeingang des Mikroprozessors 21 in Verbindung. Der Kondensator 24 ist vom Rücksetzeingang zur Masse geschaltet. Vom Ausgang PC5 führt eine Leitung zu einem nicht dargestellten Steuergerät als auch über die Reihenschaltung der Widerstände 26 und 25 zum Rücksetzeingang. Parallel zum Widerstand 25 ist die Diode 28 geschaltet. Der Quarz 22 dient in Verbindung mit einer im Mikroprozessor 21 enthaltenen Schwingschaltung zur Erzeugung des Taktsignals für den Mikroprozessor.

Die Funktionsweise der Schaltung ist wiederum die gleiche wie bereits zuvor beschrieben. Das Zeitglied wird durch den Kondensator 50 und den Pullup-Widerstand 51 gebildet. Durch die spezielle Beschaltung wird jedoch die Zahl der nötigen Bauelemente besonders gering.

**Patentansprüche**

1. Überwachungsschaltung für einen Mikroprozessor (21), insbesondere für einen Mikroprozessor zur Steuerung von Systemen im Kraftfahrzeug, bei dem ein zyklisches Signal (10) eingegeben wird, das von mindestens einem Steuersignal an einem Ausgang (PC6) des Mikroprozessors gefolgt wird und mit einer Koinzidenzschaltung (15) zur Überprüfung der Koinzidenz zwischen dem eingegebenen Signal (10) und dem Steuersignal, dadurch gekennzeichnet, daß die Koinzidenzschaltung (15) ausgangsseitig mit einem Interrupteingang (INT) des Mikroprozessors (21) verbunden ist, daß zwischen dem Ausgang der Koinzidenzschaltung (15) und dem Rücksetzeingang (RESET) des Mikroprozessors (21) ein Schaltmittel angeordnet ist, und daß das eingegebene Signal (10) einem Zeitglied (17 bis 20, 40 bis 43) zugeführt ist, dessen Ausgang das Weiterschalten von für vorgegebene Zeiten kurzzeitig am Ausgang der Koinzidenzschaltung (15) auftretenden Rücksetzimpulsen an den Rücksetzeingang (RESET) verhindert, indem es das Schaltmittel steuert.

2. Überwachungsschaltung nach Anspruch 1, dadurch gekennzeichnet, daß das Zeitglied ein Antivalenzglied (20) aufweist, dem das eingegebene Signal (10) direkt und über ein RC-Glied (18, 19) zugeführt ist.

3. Überwachungsschaltung nach Anspruch 1, dadurch gekennzeichnet, daß das Zeitglied ein Antivalenzglied (40) aufweist, dem das eingegebene Signal (10) direkt zugeführt ist, und daß dem anderen Eingang des Antivalenzgliedes (40) ein durch ein D-Flipflop (41) und ein RC-Glied (42, 43) geformtes Ausgangssignal des Antivalenzgliedes (40) zugeführt ist.

4. Überwachungsschaltung nach einem der Ansprüche 1 bis 3, dadurch gekennzeichnet, daß als Schaltmittel ein Schalttransistor (16) Verwendung findet.

5. Überwachungsschaltung für einen Mikroprozessor (21), insbesondere für einen Mikroprozessor zum Steuern von Systemen in Kraftfahrzeugen, bei dem ein zyklisches Signal (10) eingegeben wird, das von mindestens einem Steuersignal an einem Ausgang (PC6) gefolgt wird, und mit einer Koinzidenzschaltung (15) zur Überprüfung der Koinzidenz zwischen dem eingegebenen Signal und dem Steuersignal, dadurch gekennzeichnet, daß die Koinzidenzschaltung (15) ausgangsseitig mit einem Eingang (INT) des Mikroprozessors (21) verbunden ist, daß das Ausgangssignal der Koinzidenzschaltung (15) direkt und über eine Verzögerungsschaltung (50, 51) einem Antivalenzglied (55) zugeführt ist und daß der Ausgang des Antivalenzgliedes (55) mit dem Rücksetzeingang (RESET) des Mikroprozessors (21) verbunden ist, so daß während einer vorgegebenen Zeit das Durchschalten von Rücksetzimpulsen verhindert wird.

6. Überwachungsschaltung nach einem der vorhergehenden Ansprüche, dadurch gekennzeichnet, daß der Rücksetzimpuls durch Be- bzw. Entladen eines Kondensators (24) über Widerstände (23, 25, 26) ausgelöst ist.

7. Überwachungsschaltung nach Anspruch 6, dadurch gekennzeichnet, daß die Widerstände zumindest teilweise mit Dioden (28) überbrückt sind.

## Revendications

1. Circuit de surveillance d'un microprocesseur (21) notamment pour un microprocesseur commandant des systèmes équipant un véhicule automobile, selon lequel on fournit un signal cyclique (10) qui est suivi d'au moins un signal de commande appliqué à une entrée (PC6) du microprocesseur et un circuit de coïncidence (15) pour contrôler la coïncidence entre le signal introduit (10) et le signal de commande, circuit caractérisé en ce que le circuit de coïncidence (15) est relié en sortie à une entrée d'interruption (INT) du microprocesseur (21), en ce qu'entre la sortie du circuit de coïncidence (15) et l'entrée de remise à l'état initial (RESET) du microprocesseur (21), il est prévu un moyen de commutation et en ce que le signal (10) introduit est appliqué à un élément de temporisation (17... 20, 40... 43) dont la sortie à l'état initial (RESET) empêche un réenclenchement d'impulsions de remise à l'état initial qui apparaissent pendant une courte durée à la sortie du circuit de coïncidence (15) suivant une période prédéterminée, en commandant le dispositif de commutation.

2. Circuit de surveillance selon la revendication 1, caractérisé en ce que le dispositif de temporisation comporte un élément anti-valence (20) qui applique le signal (10) introduit, directement et par l'intermédiaire d'un organe RC (18, 19).

3. Dispositif de surveillance selon la revendication 1, caractérisé en ce que le dispositif de temporisation comporte un élément anti-valence (40) qui reçoit directement le signal (10) introduit et l'autre entrée de l'élément anti-valence (40) reçoit un signal de sortie de l'élément anti-valence (40) mis en forme par l'intermédiaire d'un flip-flop D (41) et d'un élément RC (42, 43).

4. Dispositif de surveillance selon l'une des revendications 1 à 3, caractérisé en ce que le moyen de commutation est un transistor de commutation (16).

5. Dispositif de surveillance pour un microprocesseur (21) notamment pour un microprocesseur de commande de système de véhicules automobiles, dans lequel on introduit un signal cyclique (10) suivi d'au moins un signal de commande à la sortie (PC6) et un circuit de coïncidence (15) pour contrôler la coïncidence entre le signal introduit et le signal de commande, dispositif caractérisé en ce que le circuit de coïncidence (15) est relié en sortie à une entrée (INT) du microprocesseur (21), le signal de sortie du circuit de coïncidence (15) étant appliqué à la fois directement et par l'intermédiaire d'un circuit de temporisation (50, 51) à un élément anti-valence (55) et la sortie de cet élément anti-valence (55) est reliée à l'entrée de remise à l'état initial (RESET) du microprocesseur (21) pour interdire la transmission d'impulsions de remise à l'état initial pendant un temps prédéterminé.

6. Circuit de surveillance selon l'une des revendications précédentes, caractérisé en ce que l'impulsion de remise à l'état initial est déclenchée par le chargement ou le déchargement d'un condensateur (24) par l'intermédiaire de résistances (23, 25, 26).

7. Dispositif de surveillance selon la revendication 6, caractérisé en ce que les résistances sont au moins partiellement court-circuitées par des diodes (28).

## Claims

1. Monitoring circuit for a microprocessor (21), in particular for a microprocessor for controlling systems in a motor vehicle, in which a cyclic signal (10) is entered which is followed by at least one control signal at an output (PC6) of the microprocessor and having a coincidence circuit (15) for testing coincidence between the signal entered (10) and the control signal, characterized in that the coincidence circuit (15) is connected on the output side to an interrupt input (INT) of the microprocessor (21), in that a switching means is arranged between the output of the coincidence circuit (15) and the resetting input (RESET) of the microprocessor (21), and in that the entered signal (10) is fed to a timing element (17 to 20, 40 to 43), the output of which prevents the switching-on of resetting pulses to the resetting input (RESET) by controlling the switching means, said resetting pulses occurring briefly for predetermined times at the output of the coincidence circuit (15).

2. Monitoring circuit according to Claim 1, characterized in that the timing element has an exclusive-OR element (20), to which the entered signal (10) is fed directly and via a RC-element (18, 19).

3. Monitoring circuit according to Claim 1, characterized in that the timing element has an exclusive-OR element (40), to which the entered signal (10) is fed directly, and in that an output signal, shaped by a D-flip-flop (41) and an RC element (42, 43), of the exclusive-OR element (40) is fed to the other input of the exclusive-OR element (40).

4. Monitoring circuit according to one of Claims 1 to 3, characterized in that a switching transistor (16) is used as switching means.

5. Monitoring circuit for a microprocessor (21), in particular for a microprocessor for controlling systems in motor vehicles, in which a cyclic signal (10) is entered which is followed by at least one control signal at an output (PC6), and having a coincidence circuit (15) for testing coincidence between the entered signal and the control signal, characterized in that the coincidence circuit (15) is connected on the output side to an input ($\overline{INT}$) of the microprocessor (21), in that the output signal of the coincidence circuit (15) is fed directly and via a delay circuit (50, 51) to an exclusive-OR element (55), and in that the output of the exclusive-OR element (55) is connected to the resetting input ($\overline{RESET}$) of the microprocessor (21), so that the switching-through of resetting pulses is prevented during a predetermined time.

6. Monitoring circuit according to one of the preceding claims, characterized in that the resetting pulse is triggered by charging or discharging of a capacitor (24) via resistors (23, 25, 26).

7. Monitoring circuit according to Claim 6, characterized in that the resistors are bypassed at least partially with diodes (28).

# FIG. 1

# FIG. 2

FIG. 3

```
         ┌──────────┐  ─30
         │  RESET   │
         └────┬─────┘
              │
         ┌────┴─────┐  ─31
         │ PC 5 = 1 │
         └────┬─────┘
              │
            ◇─┴──◇
           ◇ INT ? ◇─────────┐
            ◇────◇  ─32       │
            │ YES            │
         ┌──┴───────┐  ─33    │
         │ PC 6 = PC6│        │
         └────┬─────┘        │
              │              │
         ┌────┴─────┐  ─34    │
         │          │        │
         └────┬─────┘        │
              │              │
            ◇─┴──◇  ─35       │
           ◇ PC 6=1 ◇────────┐
            ◇────◇           │
            │ YES            │
   ┌────────┴─┐  ─36   ┌─────┴────┐  ─37
   │ PC 5 = 1 │        │ PC 5 = ∅ │
   └────┬─────┘        └─────┬────┘
        │                    │
        └──────────┬─────────┘
              ┌────┴─────┐  ─39
              │          │
              └──────────┘
```

## FIG. 4

## FIG. 5